## Europäisches Patentamt

## European Patent Office

## Office européen des brevets

(11) Publication number: **0 121 377**
**B1**

(12) **EUROPEAN PATENT SPECIFICATION**

(45) Date of publication of patent specification: **01.04.87**

(51) Int. Cl.⁴: **C 08 L 95/00**

(21) Application number: **84301895.3**

(22) Date of filing: **20.03.84**

(54) Decreasing H2S emission in bitumen/sulphur mixtures.

(30) Priority: **31.03.83 GB 8309046**

(43) Date of publication of application:
**10.10.84 Bulletin 84/41**

(45) Publication of the grant of the patent:
**01.04.87 Bulletin 87/14**

(84) Designated Contracting States:
**BE CH DE FR IT LI**

(56) References cited:
**US-A-2 482 185**

(73) Proprietor: **Exxon Research and Engineering Company**
**P.O.Box 390 180 Park Avenue**
**Florham Park New Jersey 07932 (US)**

(72) Inventor: **Muller, Jean-Marie Alfred François**
**26 rue Maurice Utrillo**
**F-76420 Bihorel (FR)**
Inventor: **Touzard, Benoit**
**29 rue des Goelands**
**F-76130 Mont Saint Aignan (FR)**

(74) Representative: **Pitkin, Robert Wilfred et al**
**ESSO Engineering (Europe) Ltd. Patents & Licences Apex Tower High Street**
**New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 121 377

## Description

This invention relates to the preparation of mixtures containing bitumen and elemental sulphur, and is more especially concerned with decreasing the emission of hydrogen sulphide during the production and/or use of such mixtures.

It is known that the addition of sulphur to bitumen leads to modified binding materials having improved handling properties, especially when hot, and improved mechanical properties in service. However, the bitumen/sulphur blending operation, whether conducted in advance or on site, for example when road-making, must take place above 120°C, the melting point of sulphur. Formation and/or use of the binder is, however, accompanied by the evolution of significant amounts of hydrogen sulphide. This is due to reaction of sulphur and hydrocarbons of the bitumen component at the temperatures involved.

Indeed, the temperature at which the binder is employed is a significant factor and temperatures below 140°C are recommended in practice in an attempt to keep hydrogen sulphide evolution to a permissible level. However, it is often very difficult, sometimes impossible, not to exceed this temperature in practice at the central mixing plant, at least for short intervals of time; sudden temperature rises are frequently observed with accompanying increases in hydrogen sulphide formation and emission.

It is an object of the present invention to provide a process for mixing bitumen and sulphur in which evolution of hydrogen sulphide is decreased.

According to the present invention there is provided a process for preparing a mixture of bitumen and sulphur, wherein bitumen and elemental sulphur are mixed at a temperature in the range 130°C to 170°C in the presence of at least one metal carboxylate or naphthenate which is at least partially soluble in the bitumen at the mixing temperature.

Generally the mixing will be conducted at a temperature of from 130°C to 160°C, preferably 130°C to 150°C, but an advantage of the process of the invention is that it can accommodate temperature surges up to 170°C and yet still maintain hydrogen sulphide evolution at an acceptably low level. The said organic salt employed will react in a manner which results in the formation of a substantially stable sulphide.

The quantity of the metal organic salt employed is conveniently expressed by weight based on the weight of bitumen employed. The quantity is also conveniently expressed in terms of zinc; the quantity being readily convertible to take into account the particular salt and/or metal actually employed. Thus, on this basis, it is preferred to employ from 0.05% to 0.4%, especially 0.1% to 0.2%, of the salt.

The said metal organic salts employed will be at least partially, preferably substantially, soluble in the bitumen under the chosen mixing conditions. The preferred metals thereof are zinc (which is especially preferred), iron and cadmium. Less preferred are copper and lead. The preferred carboxylates are salts of alkyl or alkylaryl carboxylic acids. Especially suitable are such acids having 12 or more carbon atoms per molecule. Thus, laurates, palmitates and oleates may be employed. The preferred carboxylate is, however, a stearate; especially zinc stearate. Zinc stearate is a particularly suitable compound for employment in the process of the invention.

The naphthenates and carboxylates are normally readily available compounds and have surprising and unexpected properties as $H_2S$-emission suppressants. The organic salts employed in the process of the present invention are essentially chemically different from the hydrogen sulphide suppressants disclosed in GB—A—1494198, which latter are free radical inhibitors and/or the reducing components of redox catalyst systems.

The process of this invention is applicable to the manufacture of simple bitumen/sulphur blends, but finds especial importance in the manufacture of paving mixes. In such paving mixes any suitable aggregate material may be employed. In all cases it is highly preferred that the said metal organic salt be present before the addition of the sulphur. The most preferred procedure is to first mix the bitumen and the said organic metal salt and then add aggregate (if employed) and finally the sulphur.

Normally the amount of sulphur employed will be up to 45 wt% based on the weight of bitumen, preferably up to 30 wt%, suitably 20 to 30 wt%.

The bitumen employed in the process may be any suitable type. For example, the penetration grades 40/60 to 180/220, preferably 80/100, may be employed. It is also possible to employ the mildly oxidised bitumen product of the process described in GB—A—2108998 (=EP—A—78701). The two types may be used together.

### Example 1

A standard 80/100 pen bitumen was taken. A first mix was made by blending, at 150°C, 800 g of the bitumen with 200 g of elemental sulphur. A second mix was made by first blending 1.25 wt% of zinc stearate into the same quantity of bitumen and then blending with the same quantity of sulphur, again at 150°C. A third mix was made exactly as for the second but replacing the zinc stearate by 0.54 wt% of powdered zinc oxide.

All three samples were maintained at 150°C, under vigorous stirring, and a measurement was taken for each sample of the time required for 1000 ml $H_2S$ emission to be released. The results are shown in the Table 1 below.

2

# 0 121 377

## TABLE 1

| Additive type in bitumen (%) | None — | Zinc oxide 0.54 | Zinc stearate 1.25 |
|---|---|---|---|
| Zinc in bitumen (%) | — | 0.43 | 0.13 |
| Time (minutes) for 1000 ml $H_2S$ | 37 | 38 | 75 |

It will be seen that the addition of zinc oxide (comparative example) has virtually no effect on the rate of $H_2S$ emission, whereas the zinc stearate addition doubles the time taken before the 1000 ml was collected.

Example 2

Two samples of the said bitumen were taken. To one of them 1 wt% of zinc stearate was blended in. Both samples were then blended with elemental sulphur to give mixtures having 20 wt% of sulphur.

The bitumen/sulphur blends at 135°C and aggregate at 170°C were rapidly blended and the resulting mixes transferred into a closed box whose cover was fitted with a thermometer and a device allowing a slow nitrogen flow over the surface of the mix. The box was immediately put into an oven regulated at 145°C: the temperature of the mixes then progressively (within two hours) decreased from 160 to 147°C.

The results are shown in Table 2 below:

## TABLE 2

| Bitumen type employed | $H_2S$ evolution (calculated as l/1000 kg mix) | |
|---|---|---|
| | After 1 hr | After 2 hrs |
| 80/100 pen | 28 | 57 |
| Ditto plus 1 wt% of zinc stearate | 15 | 33 |

It will be seen that the addition of the zinc stearate reduced the $H_2S$ evolution by 47% after 1 hr and 43% after 2 hrs.

**Claims**

1. A process for preparing a mixture comprising bitumen and sulphur, characterised in that bitumen and elemental sulphur are mixed at a temperature in the range 130°C to 170°C in the presence of at least one metal carboxylate or naphthenate which, at the said mixing temperature, is at least partially soluble in the bitumen and decreases hydrogen sulphide evolution.

2. A process as claimed in claim 1, wherein the mixing temperature is in the range 130°C to 150°C.

3. A process as claimed in claim 1 or claim 2, wherein the salt is derived from an alkyl or alkylaryl carboxylic acid, preferably having at least 12 carbon atoms per molecule.

4. A process as claimed in claim 3, wherein the said carboxylic acid is a $C_{16}$ to $C_{18}$ such acid.

5. A process as claimed in any preceding claim, wherein the metal of the salt in zinc, iron or cadmium.

6. A process as claimed in any preceding claim, wherein the salt employed in zinc stearate.

7. A process as claimed in any preceding claim, wherein the amount of the metal organic salt employed is from 0.05 to 0.4 wt%, when calculated as zinc, based on the weight of the bitumen.

8. A process as claimed in any preceding claim, wherein the sulphur is employed in an amount of up to 30 wt% based on the bitumen.

9. A process as claimed in any preceding claim, wherein the bitumen is mixed with the metal carboxylate or naphthenate prior to mixing with the sulphur.

10. A process as claimed in claim 9, comprising the further step of adding aggregate after the metal salt and prior to the mixing with the sulphur.

**Patentansprüche**

1. Verfahren zur Herstellung einer Bitumen und Schwefel enthaltenden Mischung, dadurch gekennzeichnet, daß Bitumen und elementarer Schwefel bei einer Temperatur im Bereich von 130 bis 170°C in Gegenwart mindestens eines Metallcarboxylats oder -napththenats, das bei der genannten Mischtemperatur zumindest teilwise in dem Bitumen löslich ist und die Schwefelwasserstoffentwicklung verringert, gemischt werden.

2. Verfahren nach Anspruch 1, dadurch gekennzeichnet, daß die Mischtemperatur im Bereich von 130 bis 150°C liegt.

3. Verfahren nach Anspruch 1 oder 2, dadurch gekennzeichnet, daß sich das Salz ableitet von einer Alkyl- oder Alkarylcarbonsäure, vorzugsweise mit mindestens 12 Kohlenstoffatomen je Molekül.

4. Verfahren nach Anspruch 3, dadurch gekennzeichnet, daß die Carbonsäure eine derartige $C_{16}$—$C_{18}$-Säure ist.

5. Verfahren nach einem der vorangehenden Ansprüche, dadurch gekennzeichnet, daß das Metall des Salzes Zink, Eisen oder Cadmium ist.

6. Verfahren nach einem der vorangehenden Ansprüche, dadurch gekennzeichnet, daß das verwendete Salz Zinkstearat ist.

7. Verfahren nach einem der vorangehenden Ansprüche, dadurch gekennzeichnet, daß die verwendete Menge an metallorganischem Salz, bezogen auf das Gewicht des Bitumen und berechnet als Zink, 0,05 bis 0,4 Gew.% beträgt.

8. Verfahren nach einem der vorangehenden Ansprüche, dadurch gekennzeichnet, daß Schwefel, bezogen auf das Bitumen, in einer Menge von bis zu 30 Gew.% verwendet wird.

9. Verfahren nach einem der vorangehenden Ansprüche, dadurch gekennzeichnet, daß das Bitumen mit dem Metallcarboxylat oder -naphthenat vor dem Mischen mit dem Schwefel gemischt wird.

10. Verfahren nach Anspruch 9, dadurch gekennzeichnet, daß nach der Zugabe des Metallsalzes und vor dem Mischen mit Schwefel Zuschlagstoffe zugegeben werden.

**Revendications**

1. Un procédé de préparation d'un mélange comprenant du bitume et du soufre, caractérisé en ce que l'on mélange du bitume et du soufre élémentaire à une température dans l'intervalle de 130°C à 170°C en présence d'au moins un carboxylate ou un naphthénate de métal qui, à ladite température du mélange, est au moins partiellement soluble dans le bitume et diminue le dégagement de sulfure d'hydrogène.

2. Un procédé comme revendiqué dans la revendication 1, dans lequel la température de mélange est dans l'intervalle de 130°C à 150°C.

3. Un procédé comme revendiqué dans l'une des revendications 1 et 2, dans lequel le sel dérive d'un acide alkyl ou alkylaryl carboxylique, ayant de préférence au moins 12 atomes de carbone par molécule.

4. Un procédé comme revendiqué dans la revendication 3, dans lequel ledit acide carboxylique est un acide en $C_{16}$ à $C_{18}$.

5. Un procédé comme revendiqué dans l'une quelconque des revendications précédentes, dans lequel le métal du sel est le zinc, le fer ou le cadmium.

6. Un procédé comme revendiqué dans l'une quelconque des revendications précédentes, dans lequel le sel employé est le stéarate de zinc.

7. Un procédé comme revendiqué dans l'une quelconque des revendications précédentes, dans lequel le sel organométallique employé représente de 0,05 à 0,4% en poids, quand on le calcule pour le zinc, par rapport au poids du bitume.

8. Un procédé comme revendiqué dans l'une quelconque des revendications précédentes, dans lequel le sulfure est employé en une quantité pouvant atteindre 30% en poids par rapport au bitume.

9. Un procédé comme revendiqué dans l'une quelconque des revendications précédentes, dans lequel on mélange le bitume avec le carboxylate ou le naphthénate de métal avant le mélange avec le soufre.

10. Un procédé comme revendiqué dans la revendication 9, comprenant l'étape supplémentaire d'addition d'aggrégat après le sel de métal et avant le mélange avec le soufre.